# EUROPEAN PATENT APPLICATION

(11) **EP 2 031 510 A1**
(43) Date of publication of application: **04.03.2009**
(21) Application number: 06757112.5
(22) Date of filing: 07.06.2006
(51) Int. Cl.: G06F 9/48, G06F 1/04, G06F 1/32, H01L 21/822, H01L 27/04

(54) **SEMICONDUCTOR INTEGRATED CIRCUIT**

(71) Applicant: Hitachi, Ltd., Chiyoda-ku Tokyo 100-8280 (JP)
(72) Inventor: KURODA, Yuki,2c/o Hitacji,Ltd., Intellectual Property Group, 12th Floor, Chiyoda-ku, Tokyo 100-8220 (JP); TANAKA, Hiroshi, Tsukuba-shi, Ibaraki 305-0821 (JP)
(74) Representative: Strehl Schübel-Hopf & Partner
(86) International application number: PCT/JP2006/311405
(87) International publication number: WO 2007/141849

(57) **Abstract**

A semiconductor integrated circuit with processors incorporated therein, which makes it possible to achieve a good balance between realizing low-power consumption control, and securing a processing performance that the practicability of real time processing is required.

The semiconductor integrated circuit with processors incorporated therein is provided with a management unit, combining first control for changing a value of the voltage and a frequency of the clock signal based on control information contained in the program, and second control for changing the voltage value and clock signal frequency according to a progress status of a process by the processor, thereby to accelerate progress of the process by the processor. In a period during which the frequency and voltage of each processor are raised, the power consumption is increased, however it becomes possible to achieve high-speed processing. While in a period during which neither frequency nor voltage of each processor are raised, high-speed processing cannot be performed, however, the power consumption is small. Thus, it is possible to achieve a good balance between to materialize low-power consumption control in a semiconductor integrated circuit with processors incorporated therein, and to ensure a processing performance that the practicability of real time processing is required.

## Description

### TECHNICAL FIELD

The present invention relates to a semiconductor integrated circuit, and a technique useful in application to e.g. a multiprocessor chip including two or more microprocessors (which is also referred to as "processor" simply).

### BACKGROUND ART

With scale-down of devices resulting from the advancement of semiconductor manufacturing techniques, it becomes possible to integrate a huge number of transistors on one chip. In the past, the frequency of processors has been rising with the progression of miniaturization of devices. However, it is becoming more difficult to expect the rise in operation frequency very much because of the increase in operation mode power consumption or the increase in standby mode power consumption owing to leakage current. Further, the enhancement of performance by improvement of its logic scheme is going to be limited.

On the other hand, digital consumer devices, such as car navigation systems, portable telephones and digital television sets, which treat miscellaneous data including images, sounds, and database information in parallel, have appeared, and the needs for processing a huge amount of data with different characteristics for a short time are increasing from day to day. To strike a balance between enhancement in performance and reduction of power consumption reflecting such needs, a so-called multiprocessor chip composed of one semiconductor chip in which various types of processors including a general-purpose processor, a purpose-built processor, a reconfigurable processor, and an accelerator such as DSP (Digital Signal Processor) are incorporated began to be used. Multiprocessor chips allows a high operational performance to be achieved by parallel processing without raising the operation frequency.

In addition, as to single-core LSIs (semiconductor integrated circuits), attempts have been made to lower the power consumption by controlling the frequency and voltage of processors. This is a technique to reduce the power consumption and heating value of an entire system by means of e.g. lowering the frequency and voltage in case of a small processing load on a processor, and turning off the power supply to a processor executing no operation. This method can lower the power consumption by application of a technique to controlling the frequency and voltage to each processor even when two or more processors are mounted on one LSI. For example, according to the Patent Documents 1, 2 and 3, as to a system configured in a multiprocessor form, it has been known that the power consumption of the whole system can be reduced by dynamically changing the operation frequency of the system and the supply voltage of the circuit under the control of its operating system.

[Patent Document 1] JP-A-2002-99433
[Patent Document 2] JP-A-2002-202893
[Patent Document 3] JP-A-2001-229040

### DISCLOSURE OF THE INVENTION

### PROBLEMS THAT THE INVENTION IS TO SOLVE

The inventor examined techniques to reduce power consumption in connection with a semiconductor integrated circuit with processors incorporated therein.

Conventionally, such techniques include a program that the frequency and voltage are statically specified for a certain task, by which a process can be realized with low power consumption. In regard to a process of which the practicability of real time handling is required, a technique that power consumption is lowered by calculating the current progress status of the process with respect to the time when the process should be completed, and dynamically changing the frequency and supply voltage in processing is used. An example of a combination of these techniques is MPEG (Moving Picture Coding Experts Group/ Moving Picture Experts Group), which is a picture processing one. According to a method adopted by MPEG, in case that one frame must to be processed in one thirtieth of a second, a process has been executed with a low voltage and a low frequency in advance, and when an operation is delayed owing to iteration of processing and exceptional disturbance, the supply voltage and frequency are made to rise.

However, in the conventional techniques, while a program that the frequency and voltage are specified statically for processors is run, dynamic frequency control is not performed additionally. The reason for this is LSIs that the voltage and frequency are specified statically have not required dynamic frequency control in the past because a dedicated circuit is assigned to a real time process, exceptional disturbance is hard to go thereinto, and two or more real time processes are not conducted in parallel.

However, as needs for a higher processing performance increase in future, and the introduction of multiprocessors becomes mainstream in the field of embedded devices, it is conceivable that real time processes will be executed in parallel, and programs will be downloaded through communications. At such times, as to a program that static frequency-voltage control is specified, there is a possibility that a process cannot be executed according to schedule. The primary reason for it is accesses to shared resources of a bus and a shared memory concentrate together with requests from other processors. Also, as for a process performed in response to an event, e.g. a receipt of a phone call by a portable telephone, and activation of a task caused by a user pushing a switch of a digital household appliance, there is a possibility that a process with a frequency and voltage scheduled statically in advance cannot be conducted according to schedule.

Information and calculations for performing frequency-voltage control on each processor are increased with the progress of introduce of multicore and the increase in number of cores. As a result, the frequency-voltage control cannot catch up with the actual operation, and further the processing of the whole chip per se is in danger of failing.

Hence, it is an object of the invention to achieve a good balance between realizing low-power consumption control for a semiconductor integrated circuit with processors incorporated therein, and securing a processing performance that the practicability of real time processing is required.

It is another object of the invention to realize low power consumption with cooperation between statically specified frequency-voltage control and dynamic frequency and voltage control according to the progress of a process.

The above and other objects of the invention and novel features thereof will be apparent from the description hereof and the accompanying drawings.

### MEANS FOR SOLVING THE PROBLEMS

Of the embodiments herein disclosed, preferred ones will be described below simply in outline.

[1] The semiconductor integrated circuit having a plurality of processors, each allowing a program to run when supplied with a voltage and a clock signal, is provided with a management unit, combining first control for changing a value of the voltage and a frequency of the clock signal based on control information contained in the program, and second control for changing the voltage value and clock signal frequency supplied to the processor in question according to a progress status of a process by the processor, thereby to accelerate progress of the process by the processor.

The above-described means enables high-speed processing. However, in a period during which the frequency and voltage of each processor are raised, the power consumption is increased. In a period during which the frequency and voltage of each processor are not raised, high-speed processing cannot be achieved, however less amount of electric power is consumed. This makes it possible to attain one object of the invention, i.e. to achieve a good balance between realizing low-power consumption control for a semiconductor integrated circuit with processors incorporated therein, and securing a processing performance that the practicability of real time processing is required. Also, it is made possible to achieve another object of the invention, i.e. to reduce power consumption by a cooperative action of a statically specified frequency-voltage control instruction and a mechanism for dynamically controlling the frequency and voltage according to the progress of each process.

[2] In the semiconductor integrated circuit as stated in [1], a plurality of domains each composed of a group including at least one of the processors apiece executing a predetermined process may be set. Further, the second control may be performed according to the progress status in each domain.

[3] In the semiconductor integrated circuit as stated in [1], the management unit may include a process for changing priority of using a bus according to the progress status in each domain.

[4] The semiconductor integrated circuit includes: a plurality of processors, each allowing a program to run when supplied with a voltage and a clock signal; and a management unit for accelerating progress of a process by the processor. In the semiconductor integrated circuit, the management unit includes a processor for executing first control for changing a value of the voltage and a frequency of the clock signal based on control information contained in the program, second control for changing the voltage value and clock signal frequency supplied to the appropriate processor according to a progress status of a process by the processor, and third control for changing priority of using a bus according to a progress status of a process by the processor. In this case, a plurality of domains each composed of a group including at least one of the processors apiece executing a predetermined process may be set. The second control may include a first process for checking the progress status of a process by each domain, and a second process for raising, in case that the domains behind schedule in progress are present, the voltage values and clock signal frequencies of the processors belonging to the domains in question from, of such domains, one domain with a higher priority in turn.

[5] In the semiconductor integrated circuit as stated in [4], the third control may include: a third process for checking progress status of a process by each domain; and a fourth process for setting the priority of using a bus so that a higher priority is assigned to a domain which needs to ensure practicability of real time processing more, and in case of conflict in priority, raising of the priority of using a bus of the domain delayed in progress.

[6] The semiconductor integrated circuit having a plurality of processors, each allowing a program to run when supplied with a voltage and a clock signal, is provided: an operation circuit capable of calculating an operation frequency and an operation voltage for meeting a time requirement necessary for completing a process by each domain based on a value of the voltage and a frequency of the clock signal set based on control information contained in the program, and progress status of the process; a clock producing circuit for producing a clock signal with a frequency based on a result of calculation by the calculation circuit, and supply the clock signal to the processor in question; and a voltage generator circuit for supplying an operation voltage and a substrate biasing voltage based on a result of calculation by the calculation circuit to the processor in question.

[7] In the semiconductor integrated circuit as stated in [6], the voltage generator circuit can control a threshold voltage of a device forming the processor in question by applying a forward bias or reverse bias to the substrate of a processor in question while changing the operation voltage of the processor.

[8] In the semiconductor integrated circuit as stated in [6], the operation circuit may include a process for changing priority of using a bus according to progress status of a process by each domain.

[9] In the semiconductor integrated circuit as stated in [1]-[8], the processors are each composed of a general-purpose processor, a DSP, a reconfigurable processor or a piece of hardware tailored to fit a certain function.

### EFFECTS OF THE INVENTION

The effects offered by the preferred ones of the embodiment herein disclosed will be described below simply.

It is possible to achieve a good balance between realizing low-power consumption control for a semiconductor integrated circuit with processors incorporated therein, and securing a processing performance that the practicability of real time processing is required. Also, it is possible to achieve another object of the invention, i.e. to reduce power consumption by a cooperative action of a statically specified frequency-voltage control instruction and a mechanism for dynamically controlling the frequency and voltage according to the progress of each process.

### BRIEF DESCRIPTION OF THE DRAWINGS

FIG. 1 is a block diagram showing an example of the configuration of a multiprocessor chip, which is an example of a semiconductor integrated circuit according to the invention.
FIG. 2 is a block diagram showing an example of the configuration of an important portion of the multiprocessor chip.
FIG. 3 is a block diagram showing an example of the general configuration of the multiprocessor chip.
FIG. 4 is a flow chart showing a main action in association with the multiprocessor chip.
FIG. 5 is a flow chart showing a main action in association with the multiprocessor chip.
FIG. 6 is a flow chart showing a main action in association with the multiprocessor chip.
FIG. 7 is an illustration for explaining an example of setting a primary register in association with the multiprocessor chip.
FIG. 8 is an illustration for explaining an example of setting a primary register in association with the multiprocessor chip.
FIG. 9 is an illustration for explaining an example of setting a primary register in association with the multiprocessor chip.
FIG. 10 is an illustration for explaining an example of setting a primary register in association with the multiprocessor chip.
FIG. 11 is an illustration for explaining an example of setting a primary register in association with the multiprocessor chip.
FIG. 12 is an illustration for explaining an example of setting a primary register in association with the multiprocessor chip.
FIG. 13 is an illustration for explaining an example of setting a primary register in association with the multiprocessor chip.

### EXPLANATION OF REFERENCE NUMERALS

- 10: Multiprocessor Chip
- 100: Multiprocessor Manager Unit
- 120, 121: Domain
- 130-135: Program
- 140-143: General-purpose Processor
- 144, 145: IP-dependent Processor
- 146: DMAC
- 147: RAM
- 201: RAM
- 203: Processor
- 204: Voltage Generator
- 205: Oscillator
- 206: PLL
- 207: Domain Set Register
- 208: Control Register
- 209: Voltage Register
- 210: Frequency Register
- 310: Bus

### BEST MODE FOR CARRYING OUT THE INVENTION

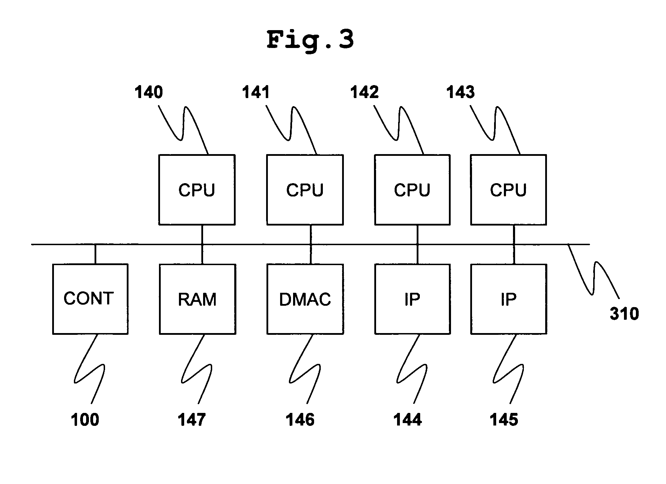

FIG. 3 shows a multiprocessor chip, which is an example of a semiconductor integrated circuit according to the invention.

The multiprocessor chip 10 shown in FIG. 3 is not particularly limited. However, it includes: general-purpose processors (CPU: Central Processing Unit) 140-143, IP(Intellectual Property)-ready processors 144 and 145, DMAC (Direct Memory Access Controller) 146, RAM (Random Access Memory) 147, and a multiprocessor management unit (CONT) 100. And, the multiprocessor chip is formed on one semiconductor substrate such as a monocrystalline silicon substrate by the well-known semiconductor integrated circuit manufacturing technique.

The general-purpose processors 140, 141, 142 and 143 each perform a predetermined operation process according to a program set in advance or a program downloaded through a communication line.

The DMAC 146 is a module for performing data transfer without using the general-purpose processors 140-145, whose setting for transfer has been made by the general-purpose processors 140-145 in advance, and which conducts data transfer automatically in response to the sending of a start signal thereto.

In general, IP is a shared property for designing LSIs. In this example, the IP-ready processors 144 and 145 may be specifically DSP, hardware dedicated to a certain function and a sophisticated processor such as a reconfigurable processor.

Now, the general-purpose processors 140, 141, 142 and 143, and IP-ready processors 144 and 145 are also referred to as just "processor," for the sake of convenience.

The RAM 147 is a shared memory which the general-purpose processors 140, 141, 142 and 143, and the IP-ready processors 144 and 145 can access, and is utilized for a working area in an operation process, etc.

The multiprocessor management unit 100 is capable of controlling the frequency of clock signals supplied to the general-purpose processors 140, 141, 142 and 143, IP-ready processors 144 and 145, and DMAC 146, controlling the supply voltage supplied to the general-purpose processors 140, 141, 142 and 143, and IP-ready processors 144 and 145, and changing the priority of using the bus for preferentially using a bus.

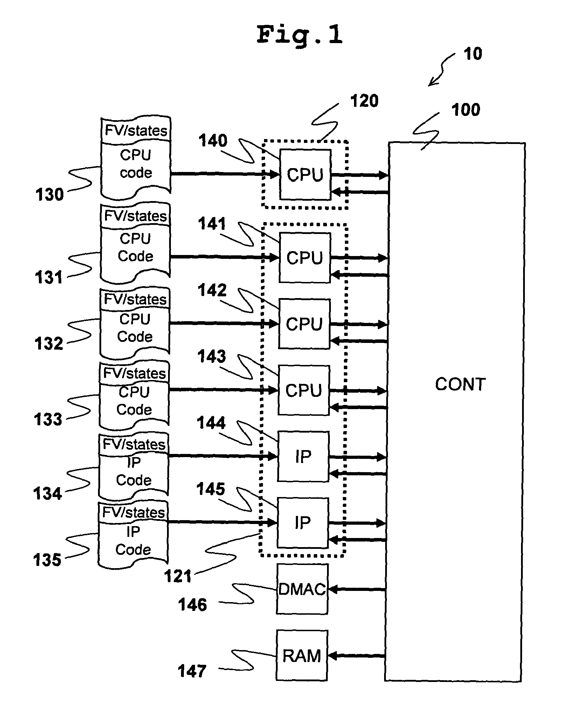

Also, on this multiprocessor chip 10, a plurality of domains 120 and 121 are set as shown in FIG. 1. Herein, the domain refers to a group including a plurality of processors for dividing and executing a predetermined process. Although no special restriction is intended, the domain 120 includes the general-purpose processor 140, and the domain 121 includes the general-purpose processors 141-143, and the IP-ready processors 144 and 145. The processors 141-145 are able to run corresponding programs 130-135.

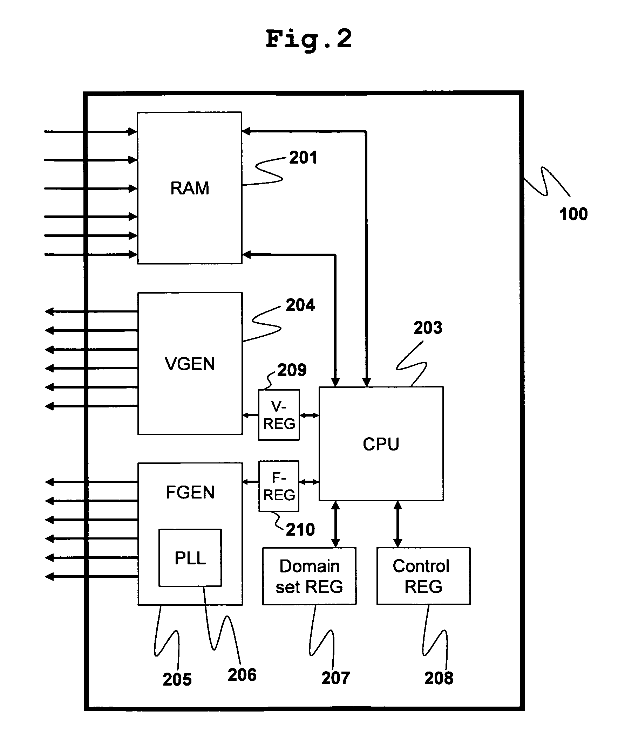

FIG. 2 shows an example of the structure of the multiprocessor management unit 100.

As shown in FIG. 2, the multiprocessor management unit 100 includes: a RAM 201; a processor (CPU) 203; a voltage generator (VGEN) 204; an oscillator (FGEN) 205; a domain set register (Domain set REG); a control register (Control REG); a voltage register (V-REG) 209; and a frequency register (F-REG) 210.

The CPU 203 has the function of accelerating the progress of processing in the processors 140-145 by combining, based on the control information contained in a program (CPU code, IP code) run by the processors 140-145, the first control including changing the value of voltage supplied to the processors 140-145 and the frequency of clock signals supplied to the processors 140-145, and the second control including changing, depending on the progress status of processing by the processors 140-145, the value of the voltage and the frequency of the clock signals supplied to the processors 140-145. For such control processing, reference is made to various kinds of information set in the RAM 201, domain set register 207, control register 208, voltage register 209 and frequency register 210. The voltage generator 204 generates a voltage supplied to the processors 140-145 according to the information set in the voltage register 209. The voltage contains supply voltages which are required by the processors 140-145 individually. The oscillator 205 includes a PLL (Phase Locked Loop) circuit, and generates a clock signal supplied to the processors 140-145. The frequency of the clock signal is decided according to the information set in the frequency register 210.

Now, data set in the control register 208 will be described.

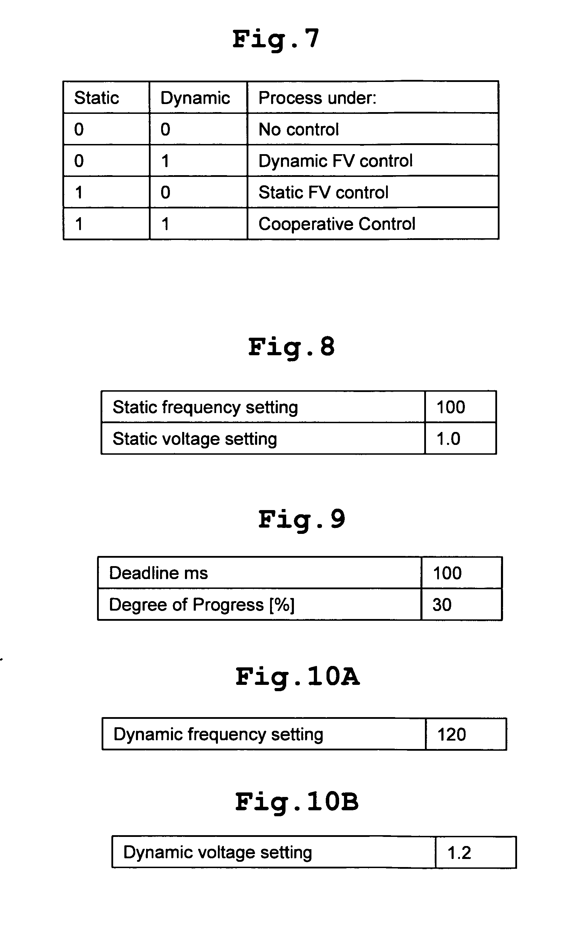

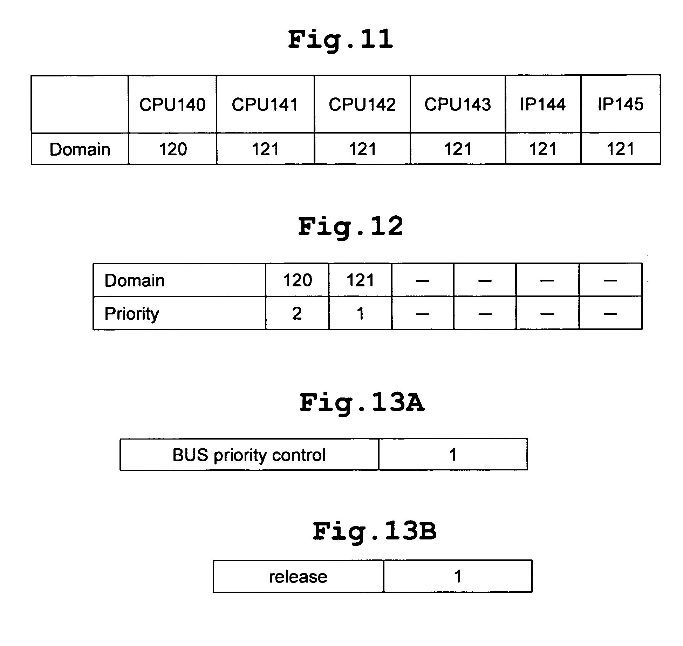

Although no special restriction is intended, static and dynamic frequency-voltage control information (see FIG. 7), and identification information concerning whether or not to perform dynamic bus-using priority control (see FIG. 13(A)) are set in the control register 208. Specifically, in case of executing static frequency-voltage control, the logical value "1" is set in a storage area concerned as shown in FIG. 7; in case of executing dynamic frequency-voltage control, the logical value "1" is set in an appropriate storage area. In case that the logical value "0" is set, the frequency-voltage control is not executed. In case that the logical value "0" is set in both areas, frequency-voltage control is not executed, the processing according to a default frequency and voltage is carried out. In case that setting is made to conduct both the controls in parallel, the cooperative control of the static and dynamic frequency-voltage controls is performed.

Also, in the control register 208 is formed a storage area for setting, on occurrence of access to the shared resources of bus 310 and RAM 147 currently used by a processor belonging to some domain by a processor belonging to a domain having a higher priority, whether or not to forcefully stop current use of the shared resources to allow the processor belonging to the domain higher in priority to use the shared resources. For example, in the control register 208, when the logical value "1" is set in the item of release as shown in FIG. 13(B), an access from a domain having a higher priority takes absolute precedence.

In the RAM 201 is formed a static information recording area for setting information (static information) set by running the programs 130-135. Although no special restriction is intended now, the static information set in the static information recording area includes information (Fsta) of setting of the clock frequency supplied to the processors 140-145, and information (Vsta) of the voltage level supplied to the processors as shown in FIG. 8, and further information of the time (deadline) by which a process must be completed for each domain as shown in FIG. 9. Also, in the RAM 201 is formed a dynamic information recording area for setting information (dynamic information) set according to the status of the running program. Although no special restriction is intended, the dynamic information set in the dynamic information recording area includes progress information of a process in execution for each domain as shown in FIG. 9. The deadline information and progress information are set for each domain by the corresponding processor. In other words, the program run by the corresponding processor for each domain stores the deadline information and progress information in the static information recording area and dynamic information recording area. The information thus stored is utilized to judge whether or not the dynamic frequency-voltage control by the multiprocessor management unit 100 is required as described later. As the deadline information and progress information are required for each domain, their storage area corresponds to each of the domains 120 and 121.

In regard to a process of which it is not required to ensure the practicability of real time processing, the setting of the deadline does not have an important meaning. In such case, for the purpose of making it possible to identify that a process concerned is a process that it is not required to ensure the practicability of real time processing, a predetermined value is set.

FIG. 10 (A) shows an example of the setting of the frequency register 210, and FIG. 10 (B) shows an example of the setting of the voltage register 209. The frequency register 210 and voltage register 209 are provided corresponding to the processors 140-145 respectively. The setting on the frequency register 210 and voltage register 209 is performed by the processor 203. When "120" is set in one frequency register 210 as shown in FIG. 10 (A), the processor corresponding to it is supplied with a clock signal of 120 MHz from the oscillator 205. Also, when "1.2" is set in one voltage register 209 as shown in FIG. 10(B), the processor corresponding to it is supplied with a supply voltage of 1.2 V from the voltage generator 204.

FIGs. 11 and 12 show examples of setting of the domain set register 207.

As shown in FIG. 11, the domain set register 207 presents the correspondence between the processors and domains. In this example, the processor 140 constitutes the domain 120 by itself, and the processors 141-145 form the domain 121. Also, in the domain set register 207, the priorities of the domains are set as shown in FIG. 12. Specifically, when in regard to some domains, it becomes necessary to accelerate their processing because of the deadlines, the priority of each domain used in increasing the frequency - voltage and setting the priority of using the bus is set.

In the example shown in FIG. 12, the priority of the domain 120 is set to two, and that of the domain 121 is set to one. For instance, the domain 121 may be regarded as being engaged in a process which needs to have the practicability of real time processing ensured, whereas the domain 122 may be considered as being engaged in a process which does not need the practicability of real time processing ensured. In this case, the domain 121 undergoes the rises in the frequency and voltage because it requires that the practicability of real time processing be ensured. Also, it is necessary to make higher the priority of using the bus. In case that the domains are different in priority, the bus-using priorities are set from a domain with a higher priority in the order of descending domains' priorities so that the higher the domain's priority is, the higher the priority of using the bus of the domain becomes, and the settings of the frequency - voltage are raised from a domain with the higher priority likewise. Now, as to the setting of the frequency - voltage, their settings are made so that the maximum power and maximum temperature allowed by the chip are never exceeded. Further, in case that the domains are equal in priority, the clock signal frequency and supply voltage are raised preferentially from a domain lower in the progress status, whereby acceleration is performed.

As to this multiprocessor chip 10, a predetermined application software program can be run using the general-purpose processors 140, 141, 142 and 143 and IP-ready processors 144 and 145. To enable this, the programs 130-135 are prepared for the processors, one for each processor. In such preparation, the programs 130-135 may be arranged to include a code for changing the frequency and voltage at the time of running a certain task.

The programs 130-135 for the respective processors may be arranged to each include the deadline information concerning what time the execution of an application running on all the domains must be ended by, and the progress information about what percentage of all the process to be executed has been completed.

In case that codes of the program which each processor executes include a frequency-voltage control instruction, an instruction for setting a deadline, and an instruction for outputting the progress information of a process, the processors 140-145 record the respective values on the predetermined register included in the multiprocessor management unit 100.

In the multiprocessor management unit 100, the frequency-voltage control statically offered by the programs, dynamic frequency-voltage control controlled by the multiprocessor management unit 100 according to the progress status of each process, and the change in the priority of using the bus of each processor are performed. In case of disabling both the static frequency-voltage control and dynamic frequency-voltage control, the frequency-voltage control and the change in bus priority are not conducted. In case of enabling both the controls, their cooperative control is performed.

In case that the frequency-voltage control function is enabled, the multiprocessor management unit 100 checks, e.g. at regular intervals, a storage area of the register or the like, which the progress status and statically provided frequency-voltage control information are recorded on, and controls the frequency, voltage and bus priority of each processor according to a value recorded thereon. At this time, the progress information for exercising dynamic control is provided to the multiprocessor management unit 100 for each domain. The actual frequency-voltage control is performed on an individual processor basis. As the progress status of a process is provided for each domain, the operation amount for exercising the frequency-voltage control which achieves dynamically processing is reduced, and the inconvenience in the dynamic frequency-voltage control and changing the bus priority is eliminated. Thus, it becomes possible to prevent a process according to dynamic frequency-voltage control from failing.

For example, it is assumed that at one point of time the progress status of the process in which the domain 121 is engaged in FIG. 1 is 10 %, and the progress status of the process executed by the domain 120 in FIG. 1 is 50%. If the processes conducted by the two domains are identical in the priority and deadline, the multiprocessor management unit 100 raises the frequency and voltage of the whole domain 120, thereby to accelerate the process.

In parallel, the multiprocessor management unit also raises the priority of a processor belonging to the domain late with the progress at the time of utilizing a shared resource such as the bus 310 or RAM 147. Thus, even in case that a domain delayed in processing attempts to utilize a shared resource, such as bus 310, DMAC 146 or RAM 147, and then causes a conflict with other domain, the domain can use a shared resource preferentially, whereby the process is accelerated. At this time, in case that a domain with a lower priority has already been using a shared resource, it is possible to set whether to suspend the process thereby to make the shared resource available, or to allow the domain delayed in processing to preferentially utilize the resource after termination of the process running at present.

Next, the static frequency-voltage control by the multiprocessor management unit 100 will be described in detail.

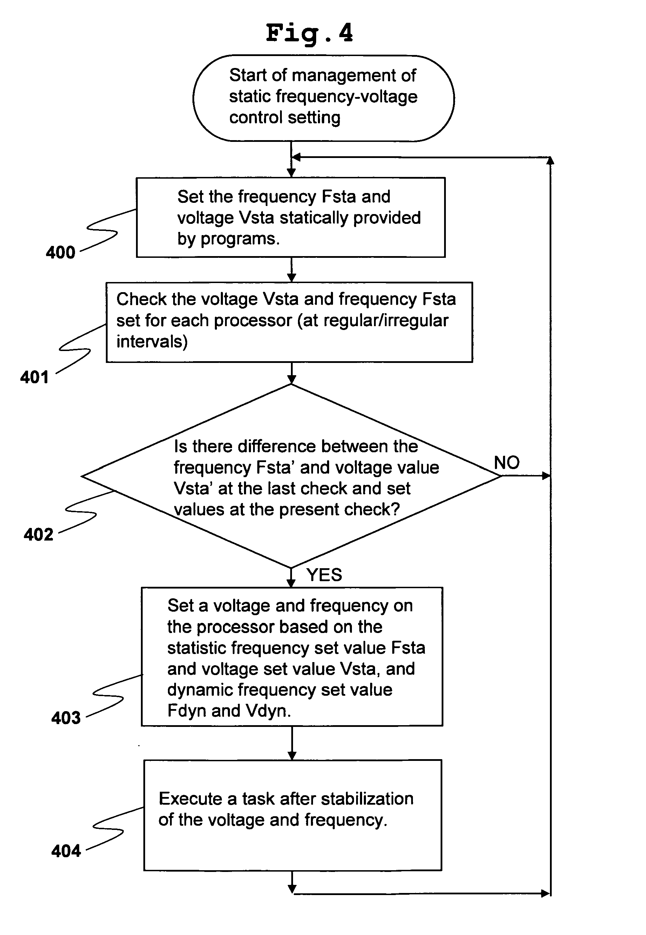

Referring to FIG. 4, the flow of control according to a frequency-voltage control instruction provided by the programs 130-135.

According to the static voltage-frequency control instruction provided by the programs 130-135, a frequency set value Fsta and a voltage set value Vsta are set in the RAM 201 inside the multiprocessor management unit 100 (400). Then, the multiprocessor management unit checks the set values (Fsta, Vsta) stored in the RAM 201 at regular intervals, or checks the values according to an instruction provided thereto (401) at irregular intervals, and judges whether or not the values Fsta' and Vsta' at the last check are different from the values Fsta and Vsta set at present (402). In case that the values are judged as being different from those at the last check (YES) in this judgment, a new frequency and voltage value is set for each processor in consideration of dynamic frequency - voltage set values, which are to be described later (403). Then, after the frequency and voltage value stabilize, execution of the task is resumed (404). After that, the flow of the control is transferred to the setting process of Step 400. In case that the present values are judged as not being different from those at the last check (NO) in judgment of Step 402, the flow of the control is transferred to the setting process of Step 400.

Next, the dynamic frequency-voltage control by the multiprocessor management unit 100 will be described.

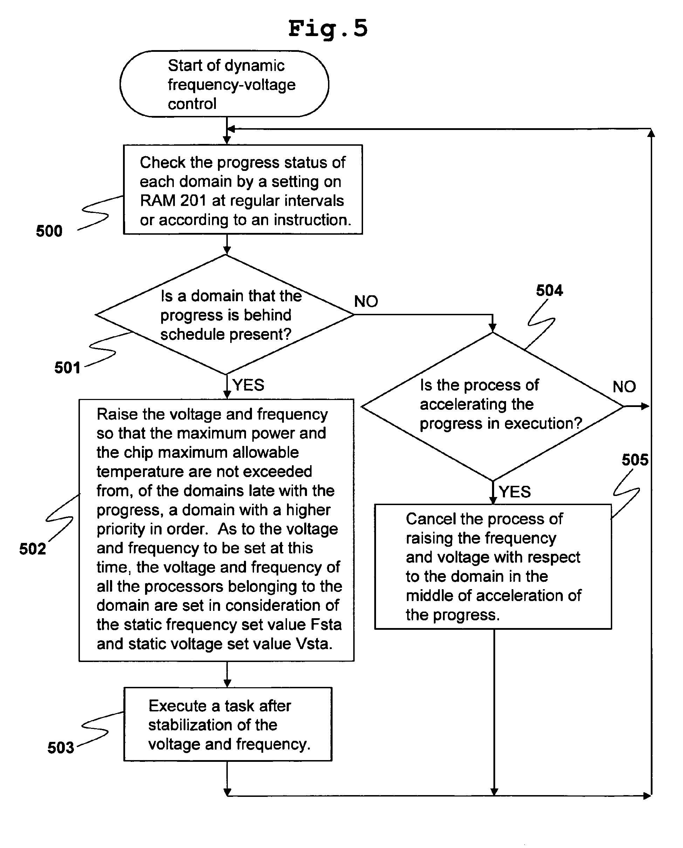

Referring to FIG. 5, the flow of dynamic control of the frequency and voltage according to the progress status of the process executed in each domain is shown.

The progress status of the process executed in each domain at present is checked by a setting on RAM 201 at regular intervals or according to a provided instruction (500). Specifically, the progress status of the process in execution is recorded on the RAM 201 by the program running on each domain and therefore, it is calculated from the value whether or not the process is going to be completed with the current set frequency and set voltage with respect to the time, which the process must be finished by. Now, it is noted that the time, which the process must be finished by is set on the RAM 201 (see FIG. 9).

Then, a judgment on whether or not a domain that the progress is behind schedule is present is made (501). In other words, it is checked whether or not the process is going to be completed by the time, which the process must be finished by. In case that a domain that the progress is behind schedule is judged as being present (YES) in this judgment, the frequency and voltage of all the processors included in the domain are raised, whereby the progress of the process is accelerated (502). The frequency and voltage set at this time are used to set the frequency and voltage of a functional unit belonging to the domain concerned in consideration of the above-described static frequency set value Fsta and static voltage set value Vsta (502). The means for the change in the frequency and voltage includes: a method of adding the dynamic frequency set value Fdyn and dynamic voltage set value Vdyn to the static frequency set value Fsta and static voltage set value Vsta; and a method of dynamically multiplying the static frequency set value Fsta and static voltage set value Vsta. As a matter of course, these frequency setting and voltage setting depend on the frequency set value and voltage set value which a processor concerned can take, a process such as approximation is also taken into account. In addition, at this time, the progress of the process is accelerated within a range that the maximum power allowed by the whole chip and the maximum allowable temperature are not exceeded. In case that the progress status of the process is judged as being delayed in regard to two or more domains, preferentially from, of such domains, a domain having a higher execution priority, the voltage and frequency are raised. Thus, the process of interest is accelerated. Then, execution of the task is resumed after the frequency and voltage value have stabilized (503). After that, the flow of the control is transferred to the checking process of Step 500. Further, in case that a domain that the progress is behind schedule is judged as not being present (NO) in the judgment of Step 501, a judgment on whether or not the process of accelerating the progress is in execution is made (504). In case that the process of accelerating the progress is judged as being in execution (YES) in this judgment, the process of raising the frequency and voltage on a domain in the middle of acceleration of the progress is canceled (505). This is because the need for accelerating the progress is eliminated after delay of processing has been overcome by raising the frequency and voltage and making higher the priority of using the bus. Then, after the process of raising the frequency and voltage on the domain in the middle of acceleration of the progress has been canceled, the flow of the control is transferred to the checking process of Step 500. Also, in case that the process of accelerating the progress is judged as not being in execution (NO) in the judgment of Step 504, the flow of the control is transferred to the checking process of Step 500. As stated above, in case that the supply voltage of a processor and the frequency of clock signals supplied to the processor are dynamically changed as required while observing the progress status of a process on an individual domain basis, the need for accelerating the progress is eliminated, and the process of raising the supply voltage and clock signal frequency is canceled, which involves no increase in power consumption.

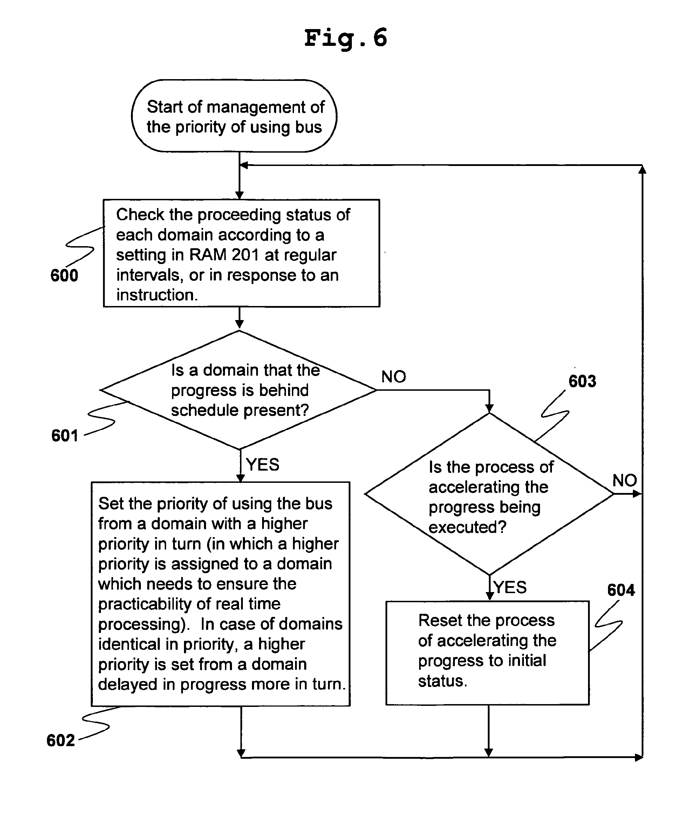

Referring to FIG. 6, the flow when the priority of using the bus 310 is dynamically changed according to the progress status of the process executed in each domain is shown.

The progress status of the process executed in each domain at present is checked by a setting on control register 208 in the multiprocessor management unit 100 at regular intervals or according to a provided instruction (600). Specifically, the progress status of the process in execution at present is recorded on the RAM 201 from each domain, it is calculated from the value whether or not the process is going to be completed with the current set frequency and set voltage with respect to the time, which the process must be finished by. Now, it is noted that the time, which the process must be finished by is set on the RAM 201. Then, a judgment on whether or not a domain that the progress of the process is behind schedule is present is made (601). In case that a domain that the progress of the process is behind schedule is judged as being present (YES) in this judgment, the priority of using the bus is made higher from a domain having a higher execution priority preferentially (602). This priority is made higher in case that the process in question is one which needs to ensure the practicability of real time processing. The execution priority of each domain can be set in the domain set register 207. In other words, the priority of using the bus is set in consideration of the progress status of a process in each domain and the execution priority thereof (602). After the setting of the priority of using the bus, the flow of bus priority control is transferred to the process of Step 600. Further, in case that a domain that the progress of the process is behind schedule is judged as not being present (NO) in the judgment of Step 601, a judgment on whether or not the process of accelerating the progress (the process of Step 602) is in execution is made (603). In case that the process of accelerating the progress (the process of Step 602) is judged as being in execution (YES) in this judgment, the priority changed in Step 602 is reinstated in its initial state. Then, the flow of bus priority control is transferred to the process of Step 600 (604). Further, in case that the process of accelerating the progress (the process of Step 602) is judged as not being in execution (NO) in the judgment of Step603, the flow is also transferred to the process of Step 600.

According to the above example, the following effects and advantages can be achieved.

(1) In case that codes of a program run by each processor contain a frequency-voltage control instruction, an instruction for setting a deadline and an instruction for outputting the progress information of a process, the processors 140-145 record the respective values on the predetermined register included in the multiprocessor management unit 100. In the multiprocessor management unit 100, the static frequency-voltage control offered by the programs, dynamic frequency-voltage control controlled by the multiprocessor management unit 100 according to the progress status of each process, and the change in the priority of using the bus of each processor are performed. In case that the frequency-voltage control function is enabled, the multiprocessor management unit 100 checks, e.g. at regular intervals, a storage area of the register or the like, which the progress status and statically provided frequency-voltage control information are recorded on, and controls the frequency, voltage and bus priority of each processor according to a value recorded thereon. In a period during which the frequency and voltage of each processor are raised, the power consumption is increased, however it becomes possible to achieve high-speed processing. While in a period during which neither frequency nor voltage of each processor are raised, high-speed processing cannot be performed, however, the power consumption is small. Therefore, the control as described above enables to achieve a good balance between materialization of low-power consumption control in a semiconductor integrated circuit with processors incorporated therein, and to ensure a processing performance that the practicability of real time processing is required. In addition, the cooperative action of a frequency-voltage control instruction statically specified and a mechanism which dynamically controls the frequency and voltage according to the progress of a process can reduce the power consumption.

(2) The progress information for performing dynamic control is provided to the multiprocessor management unit 100 for each domain. The actual frequency-voltage control is performed on an individual processor basis. As the progress of a process is provided for each domain, the operation amount for exercising the frequency-voltage control which achieves dynamically processing is reduced, and the inconvenience in the dynamic frequency-voltage control and changing the bus priority is eliminated. Thus, it becomes possible to prevent a process according to dynamic frequency-voltage control from failing.

(3) In addition, a processor belonging to a domain late with the progress is allocated a higher priority at the time of utilizing a shared resource such as the bus 310 or RAM147. Thus, even in case that a domain delayed in processing attempts to utilize a shared resource, such as bus 310 or RAM 147, and then causes a conflict with other domain, the domain can use a shared resource preferentially, whereby the process is further accelerated.

(4) The effects and advantages as described in the above item (1) to (3) are particularly remarkable in executing a process that the practicability of real time processing must be ensured as in a case of executing a process performed in response to an event, such as a receipt of a phone call in portable telephones or execution of a process by a user direction in embedded devices, and a case of downloading and running a statically scheduled program through a network, for instance.

While the invention made by the inventor has been specifically described above based on the embodiments thereof, the invention is not so limited. It is needless to say that various changes and modifications may be made without departing from the subject matter hereof.

The threshold voltage of a transistor may be controlled, for example, by controlling a substrate biasing voltage of a semiconductor region where the processors 140-145 are formed. For example, in case that the voltage generator circuit 204 produces a substrate biasing voltage for the semiconductor region where the processors 140-145 are formed, a supply voltage supplied to each processor is increased according to the progress status of a process in the domain and in conjunction with this, a positive voltage is applied to the substrate of an nMOS transistor of the processor concerned, and a voltage lower than the supply voltage is put on the substrate of a pMOS transistor, whereby the absolute values of threshold voltages of the nMOS and pMOS transistors forming the processor concerned are lowered. Lowering the absolute value of the threshold voltage of the CMOS transistor allows the device concerned to work at a high speed. In case that it is not required to operate each processor at a high speed, a negative voltage is applied to the substrate of the nMOS transistor and a voltage higher than the supply voltage is put on the substrate of the pMOS transistor previously, whereby the absolute values of the threshold voltages of the nMOS and pMOS transistors forming the processor concerned are made higher. The leakage current of the device concerned can be reduced by raising the absolute values of the threshold voltages of the nMOS and pMOS transistors. This works advantageously in reduction of power consumption by the multiprocessor chip 100.

### INDUSTRIAL APPLICABILITY

The invention can be widely applied to a data processing apparatus with two or more processors incorporated therein.

## Claims

1. A semiconductor integrated circuit comprising:
a plurality of processors, each running a program when supplied with a voltage and a clock signal; and
a management unit, combining first control for changing a value of the voltage and a frequency of the clock signal based on control information contained in the program, and
second control for changing the voltage value and clock signal frequency supplied to the processor in question according to a progress status of a process by the processor, thereby to accelerate progress of the process by the processor.

2. The semiconductor integrated circuit according to Claim 1, wherein a plurality of domains each composed of a group including at least one of the processors apiece executing a predetermined process are set, and
the second control is performed according to the progress status in each domain.

3. The semiconductor integrated circuit according to Claim 1, wherein the management unit includes a process for changing priority of using a bus according to the progress status in each domain.

4. A semiconductor integrated circuit comprising:
a plurality of processors, each running a program when supplied with a voltage and a clock signal; and
a management unit for accelerating progress of a process by the processor,
wherein the management unit includes a processor for executing a first control for changing a value of the voltage and a frequency of the clock signal based on control information contained in the program, a second control for changing the voltage value and clock signal frequency supplied to the appropriate processor according to a progress status of a process by the processor, and a third control for changing priority of using a bus according to a progress status of a process by the processor,
a plurality of domains each composed of a group including at least one of the processors apiece executing a predetermined process are set, and
the second control includes a first process for checking the progress status of a process by each domain, and
a second process for raising, in case that the domains behind schedule in progress are present, the voltage values and clock signal frequencies of the processors belonging to the domains in question from, of such domains, one domain with a higher priority in turn.

5. The semiconductor integrated circuit according to Claim 4, wherein the third control includes: a third process for checking progress status of a process by each domain; and
a fourth process for setting the priority of using a bus so that a higher priority is assigned to a domain which needs to ensure practicability of real time processing more, and
in case of conflict in priority, raising of the priority of using a bus of the domain delayed in progress.

6. A semiconductor integrated circuit having a plurality of processors, each running a program when supplied with a voltage and a clock signal, comprising:
an operation circuit capable of calculating an operation frequency and an operation voltage for meeting a time requirement necessary for completing a process by each domain
based on a value of the voltage and a frequency of the clock signal set based on control information contained in the program, and progress status of the process;
a clock producing circuit for producing a clock signal with a frequency based on a result of calculation by the calculation circuit, and supply the clock signal to the processor in question; and
a voltage generator circuit for supplying an operation voltage and a substrate biasing voltage based on a result of calculation by the calculation circuit to the processor in question.

7. The semiconductor integrated circuit according to Claim 6, wherein the voltage generator circuit can control a threshold voltage of a device forming the processor in question by raising or lowering the substrate biasing voltage of the processor in question while controlling the operation voltage of the processor.

8. The semiconductor integrated circuit claimed according to 6, wherein the operation circuit includes a process for changing priority of using a bus according to progress status of a process by each domain.

9. The semiconductor integrated circuit according to any one of Claims 1 to 8, wherein the processors are each composed of a general-purpose processor, a DSP or a reconfigurable processor.
